# EUROPÄISCHE PATENTSCHRIFT

(11) **EP 2 551 787 B1**
(45) Veröffentlichungstag und Bekanntmachung des Hinweises auf die Patenterteilung: **02.04.2014**
(21) Anmeldenummer: 12175164.8
(22) Anmeldetag: 05.07.2012
(51) Int. Cl.: G06F 21/83

(54) **Vorrichtung und Verfahren für eine sicherheitsrelevante Eingabe über ein Anzeigegerät mit Berührungseingabe**
Dispositif et procédé pour une saisie relevant de la sécurité au moyen d'un appareil d'affichage avec saisie tactile
Device and method for input of security-relevant information using a display device with touch input

(30) Priorität: 25.07.2011 DE 102011079766; 29.12.2011 DE 102011090135
(43) Veröffentlichungstag der Anmeldung: 30.01.2013
(73) Patentinhaber: Deuta-Werke GmbH, 51465 Bergisch Gladbach (DE)
(72) Erfinder: Ganz, Rudolf, 51491 Overath (DE)
(74) Vertreter: Lippert, Stachow & Partner

(56) Entgegenhaltungen:
- US-A1- 2009 254 986
- US-A1- 2010 175 016
- US-A1- 2010 185 953
- US-B1- 6 630 928

## Beschreibung

Die Erfindung betrifft allgemein die Eingabe über ein Anzeigegerät mit Berührungseingabe, üblicherweise ein rechnergestütztes Anzeigegerät, und betrifft insbesondere eine Vorrichtung und ein Verfahren für eine sicherheitsrelevante Bedienung durch Eingabe an einem solchen Anzeigegerät.

Anzeigegeräte, Displays oder Bildschirme, insbesondere TFT-Panel, werden häufig mit Bedienfähigkeit über Berührungseingabe ausgestattet. Sie erlauben dadurch eine intuitive und ergonomische Bedienung, meist durch Berühren der Anzeige, ohne Verwendung eines separaten Eingabegeräts, wie bei ursprünglichen Rechnern üblich. Ein typisches Beispiel ist der sogenannte Berührungsbildschirm oder Touchscreen als kombiniertes Anzeige- und Eingabegerät.

Derartige Anzeige- und Bediengeräte werden inzwischen auch bereits für die Eingabe sicherheitsrelevanter Daten genutzt oder zumindest hierfür gewünscht, beispielsweise im Führerstand eines Eisenbahn-Triebfahrzeugs oder ein Steuerpult für den Betrieb eines Reaktors. Das Anwendungsgebiet ist jedoch nicht auf derartige Multi-Funktions-Terminals beschränkt, sondern umfasst auch andere Vorrichtungen, etwa tragbare Kleingeräte mit Berührungsbildschirmen, insbesondere Tablett-PCs oder Smartphones, welche mehr und mehr zur Steuerung von Maschinen oder Anlagen eingesetzt werden. Tablett-PCs werden beispielsweise inzwischen auch zur Steuerung von Container-Kränen in Häfen verwendet.

Bereits die reine Anzeige ganz ohne Berührungseingabe ist fehleranfällig und deshalb in sicherheitskritischen Anwendungen nicht unbedenklich. So können z. B. Fehler in jeder einzelnen Komponente der zugehörigen Recheneinheit auftreten, z. B. durch einen defekten Mikroprozessor, im Grafikprozessor, in den einzelnen Speicherbausteinen, in der Spannungsversorgung oder auch in dem eingesetzten Betriebssystem sowie der bei der Softwareerstellung verwendeten Bibliotheken. Eine deutliche Verbesserung diesbezüglich wird mit dem Verfahren zur Darstellung einer sicherheitsrelevanten Information gemäß WO 2011/003872 vorgeschlagen, deren Lehre jedoch lediglich die Darstellung sicherer gestaltet.

Werden nun zusätzlich zur reinen Darstellung sicherheitsrelevanter Informationen auch sicherheitsrelevante Eingaben an einem kombinierten Anzeige- und Eingabegerät, wie bspw. einem Touchscreen vorgenommen, kommen ganz offensichtlich weitere Fehlerquellen hinzu. Quellen potenzieller Fehler stellen grundsätzlich alle zur Erfassung und Verarbeitung der Eingabe benutzten Hardware und Software-Komponenten dar. Aus diesem Grund ist auch und gerade bei Berührungsbildschirmen eine Sicherheitsprüfung zur Zertifizierung eines entsprechenden Gesamtsystems sehr aufwändig und muss stets sämtliche Komponenten umfassen. Entsprechend ist die praktische Umsetzung einer benutzerfreundlichen Eingabe sicherheitsrelevanter Daten an Touchscreens regelmäßig aufwändig und teuer, insbesondere in sehr kritischen Anwendungen, wie bspw. im Führerstand eines Triebwagens einer Lokomotive.

Bei Verwendung kombinierter Anzeige- und Eingabeeinheiten ist es auch in weniger kritischen Anwendungen dennoch wünschenswert, sicherzustellen, dass die als eingegeben erfasste Information genau derjenigen entspricht, die der Bediener über die Eingabe bewusst aus- bzw. angewählt hat.

Eine Aufgabe der vorliegenden Erfindung ist es mithin, eine Vorrichtung bzw. ein Verfahren vorzuschlagen, welches allgemein die Sicherheit einer Eingabe an einem Anzeigegerät erhöht. Die Lösung soll insbesondere erlauben, möglichst alle potenziellen Fehler bei der Informationserzeugung, -verarbeitung und/oder -übertragung zu erkennen. Dies kann insbesondere mit dem Ziel erfolgen, im Bedarfsfall eine sicherheitsgerichtete Aktion auszulösen, wie beispielsweise die Eingabe als ungültig zu verwerfen.

Diese Aufgabe wird gelöst durch ein Verfahren nach Anspruch 1 bzw. eine Vorrichtung nach Anspruch 8.

In einer besonders einfachen Ausführung wird die Aufgabe bereits dadurch gelöst, dass im Zusammenhang mit einer Anzeige auf einem gattungsgemäßen Anzeigegerät mit Berührungseingabe ein Auslesen bzw. Erfassen der Berührungseingabe erfolgt, vorzugsweise getrennt von der herkömmlichen Erkennung der Bedienungseingabe, und hierdurch in einer Prüfeinheit ein Überwachungsbereich ausgewählt wird, welcher dem Teilbereich der Anzeige entspricht innerhalb dessen die ermittelte Berührungseingabe erfolgte. Die vorgeschlagene Prüfeinheit ist ferner erfindungsgemäß entweder unmittelbar oder indirekt mit der Bilddatenleitung zum Anzeigegerät verbunden und erstellt rechentechnisch einen Prüfcode für denjenigen Teil der Bilddaten, die zur Anzeige im ausgewählten Überwachungsbereich vorgesehen sind. Dieser Prüfcode wird ausgegeben bzw. ausgelesen, insbesondere zwecks Veranlassung einer sicherheitsgerichteten Reaktion.

Bereits hierdurch kann bei Anzeigegeräten mit Berührungseingabe sichergestellt werden, dass genau die Betätigung bzw. Eingabe erkannt wird, die vom Bediener auch tatsächlich ausgeführt wurde, gegebenenfalls auch unabhängig davon, wo diese sich innerhalb der Anzeige befunden hat. Insbesondere wird durch die Einführung der Prüfeinheit bzw. deren Prüfcodes ermöglicht, dass Eingaben, die bspw. in einem Sicherheitsrechner nicht als korrekt ausgewertet werden, verworfen werden können. Durch das vorgeschlagene Verfahren wird der Zertifizierungsaufwand von sicherheitskritischen Systemen erheblich verringert.

Sicherheitskritische Anwendungen der Erfindung umfassen neben den eingangs erwähnten Beispielen allgemein alle Anwendungen im Bereich der Gefahren- bzw. Betriebssicherheit von Maschinen und auch Anlagen (Engl. safety), insbesondere solche mit hohem Gefahrenpotential bei Fehlbedienung, wie etwa im Fall der Kraftwerkssteuerung. Die Erfindung ist jedoch auch vorteilhaft anwendbar im Bereich kritischer Zugriffs- bzw. Autorisierungssicherheit (Engl. security), insbesondere von autorisierungsbedürftigen Datenverarbeitungsanlagen und Vorrichtungen wie etwa Geldautomaten. Gegebenenfalls kann die Erfindung zugleich zu Zwecken der Bediensicherheit und der Zugriffssicherheit genutzt werden. Mit der rechentechnischen Erstellung des Prüfcodes, ist vorliegend auch nicht im engeren Sinne eine Berechnung anhand eines Neumann-Rechners, sondern im weitesten Sinne das Erstellen einer Signatur oder "Fingerprints" oder sonstigen Codes in Funktion der Bilddaten in dem durch Bedienung ausgewählten Überwachungsbereich gemeint. Bevorzugt erfolgt das Erstellen von Prüfcodes in der Prüfeinheit ausschließlich oder überwiegend schaltungstechnisch und somit fast verzögerungsfrei anhand einer hierzu entworfenen Schaltung aus logischen Gattern, vorzugsweise anhand eines FPGA, wie in der WO 2011/003872 vorgeschlagen.

In bevorzugter Ausführung sind das Verfahren und die Vorrichtung zu dessen Durchführung ausgelegt zur Übermittlung des durch die Prüfeinheit erstellten Prüfcodes sowie des Werts, welcher durch die Recheneinheit als durch Berührungseingabe am Anzeigegerät eingegeben ermittelt wurde, an einen Sicherheitsrechner. Vorzugsweise wird im Sicherheitsrechner dann ein dem Prüfcode entsprechender Vergleichswert ermittelt, vorzugsweise anhand einer Lookup-Tabelle (Vergleichstabelle mit den den möglichen Prüfcodes zugeordneten Vergleichswerten). Durch Vergleich des als eingegeben ermittelten Werts mit dem Vergleichswert kann je nach Vergleichsergebnis eine sicherheitsgerichtete Reaktion erfolgen, insbesondere das Verwerfen des als eingegeben ermittelten Werts erfolgen. Die Reaktion kann in der Recheneinheit und/oder im Sicherheitsrechner oder an sonstiger geeigneter Stelle des Systems erfolgen.

Eine vorteilhafte Weiterbildung, umfasst zunächst das Anzeigen eines Betätigungselements in einem ersten Zustand am Anzeigegerät, das Ermitteln einer Betätigung des Betätigungselements, Auswahl des entsprechenden Überwachungsbereichs durch die Prüfeinheit und das Übermitteln eines ersten Prüfcodes, welcher dem Betätigungselement im ersten Zustand entspricht an den Sicherheitsrechner. Zur Bestätigung und sichereren Bedienung umfasst diese Weiterbildung ferner das anschließende Anzeigen des Betätigungselements in einem zweiten Zustand, entsprechendes Übermitteln eines zweiten Prüfcodes, welcher dem Betätigungselement im zweiten Zustand entspricht an den Sicherheitsrechner, und schließlich Prüfung, ob zum empfangenen ersten Prüfcode der entsprechende zweite Prüfcode im Sicherheitsrechner empfangen wird. Hierdurch kann zur höheren Sicherheit das Bestätigen des als eingegeben ermittelten Wertes erst nach Eingang des erwarteten zweiten Prüfcodes erfolgen.

Das erfindungsgemäße Verfahren und die Vorrichtungen zu dessen Durchführung ermöglichen auch, nach Ermitteln eines dem Prüfcode entsprechenden Eingabewerts, bspw. anhand einer Lookup-Tabelle, das Nutzen des dem Prüfcode entsprechenden Eingabewerts als eingegebenen Wert in der Recheneinheit und/oder im Sicherheitsrechner. Mit anderen Worten wird nicht der von der herkömmlichen Recheneinheit als eingegeben ermittelte Wert, sondern stattdessen derjenige zurückbehalten, welcher durch die Prüfeinheit und deren unabhängigen Kanal übertragen wird. Diese Ausführung ermöglicht es, insbesondere bei echtzeitfähigem Sicherheitsrechner, die erfindungsgemäße Prüfeinheit zur schnellen Erfassung von Eingaben für echtzeitkritische Anwendungen auszunutzen. Dies kann ergänzend oder alternativ zur vorgenannten Sicherheitsfunktion genutzt werden.

Die erfindungsgemäße Vorrichtung kann als separater Bestandteil zum Nachrüsten einer Benutzerschnittstelle herkömmlicher Bauart oder aber als integraler Bestandteil einer solchen ausgeführt sein.

In einer kostengünstigen Ausführung wird zur Bestimmung des Überwachungsbereichs die Erfassungskomponente genutzt, welche bereits Bestandteil eines handelsüblichen Berührungsbildschirms ist. Eine erhöhte Sicherheit und/oder Nachrüstbarkeit kann mit einer redundanten zweiten oder weiteren Erfassungskomponente erzielt werden, bspw. einem zusätzlichen Foliensensor. Im erstgenannten Fall lässt sich auch Redundanz zur Sicherheitserhöhung erreichen, indem die bereits vorhandene Erfassungskomponente mehrfach, gegebenenfalls zeitversetzt, ausgelesen wird, wobei das zusätzliche Auslesen zur Bestimmung des Überwachungsbereichs genutzt wird. Im zweit genannten Fall erhöht bereits die redundante Erfassungskomponente durch einen unabhängigen Auslesekanal die Sicherheit. Alternativ oder ergänzend kann Sicherheitserhöhung durch eine oder mehrere redundante Ausleseschaltungen bzw. Sensorcontroller an der/den Erfassungskomponente(n) erzielt werden. Alternativ oder ergänzend kann weitere Sicherheitserhöhung auch durch zwei oder mehrere redundant vorgesehene Prüfeinheiten erreicht werden. Ferner ist weitere Sicherheitserhöhung möglich, indem alternativ oder ergänzend zwecks Redundanz für mehrere Überwachungsbereiche zum gleichen Prüfgegenstand separat und gegebenenfalls mit unterschiedlichen Codierverfahren Prüfcodes erstellt werden. Die Überwachungsbereiche können sich überschneiden und, insbesondere bei unterschiedlichen Codierverfahren, auch überlappen. Letztgenannte Art der Redundanz ist insbesondere vorteilhaft bei ausreichender bzw. überschüssiger Kapazität der in der Prüfeinheit zur Codierung verwendeten Hardware. Mit zeitgemäßen FPGA's und typischen Bilddatenraten können ohne weiteres mehrere Prüfcodes zeitlich parallel in einer Schaltung erstellt werden. Sicherheitserhöhung kann durch eine beliebige Kombination einiger oder aller zuvor beschriebenen Redundanzen innerhalb der Wirkkette erzielt werden. Redundanz ist jedoch in der Regel nur an einer Stelle der Wirkkette mit besonderer Fehleranfälligkeit erforderlich. Bereits die unmittelbare Kopplung der Prüfeinheit an eine berührungserfassende Komponente bewirkt die entscheidende Verbesserung, indem eine Bedienhandlung quasi in Echtzeit und sicherheitstechnisch zuverlässig überprüfbar wird.

Zur weiteren Erhöhung der Sicherheit kann die Bedienung mit geeigneter Anzeige im Sinne einer Mehrfachbedienung gestaltet werden, ähnlich etwa aus Betriebssystemen bekannten Bestätigungsrückfragen. Demnach kann es zweckmäßig sein, einen Ablauf vorzusehen, in dem ein sequentielles Auslesen der Erfassungskomponente zur Auswahl mehrerer entsprechender Überwachungsbereiche durch die Prüfeinheit erfolgt. Hierbei entspricht demnach jeder Überwachungsbereich in der Sequenz demjenigen Teilbereich innerhalb dessen eine von mehreren aufeinander folgenden Berührungseingaben erfolgte. Zur Erhöhung der Sicherheit wird ein jeweiliger Prüfcode in der Prüfeinheit zu jedem der Überwachungsbereiche in der Sequenz erstellt. Anhand der Ausgabe bzw. des Auslesens einer entsprechenden Sequenz oder Folge von erstellten Prüfcodes kann sichergestellt werden, dass genau die erfasste Bedienung vom Benutzer mit Sicherheit gewünscht ist.

Kalibrier- oder Messfehler, welche bei handelsüblichen Berührungsbildschirmen nicht selten vorkommen, können durch Ausführen eines zuvor beschriebenen Ablaufs mit Mehrfachbedienung als Kontrollablauf erkannt und ggf. auch kompensiert werden. Ein zweckmäßiger Kontrollablauf zur Ermittlung möglicher Fehler beim Auslesen der Erfassungskomponente und/oder der zusätzlichen Erfassungskomponente sieht vor, dass die Anzeige in einer fest vorgegebenen Reihe von Teilbereichen zu bedienende Prüfelemente anzeigt und der Sicherheitsrechner den Empfang einer entsprechenden Folge von Prüfcodes kontrolliert.

Zur Vermeidung systematischer Fehler und/oder von Bedienfehlern durch Unaufmerksamkeit oder Routineverhalten des Benutzers ist es vorteilhaft, die Bedienung mit einer zeitlich variablen, vorzugsweise zufälligen, Anordnung von bestimmten graphischen Displayelementen zu gestalten. Anstatt der herkömmlichen zeitlich invariablen Anordnung, werden Elemente zwecks entsprechender Berührungseingaben an der Anzeige in zeitlich zufällig ändernder Lage angezeigt. Dadurch, dass die Prüfcodes stets inhärent und ohne weiteres Zutun dem tatsächlich vom Benutzer an- bzw. ausgewählten Bereich entsprechen, entsteht bei der Verarbeitung kein durch diese Variation bzw. den Zufall der Anzeige bedingter Zusatzaufwand.

Vorzugsweise sind zur Redundanz und erhöhten Sicherheit die Prüfeinheit und/oder der Sicherheitsrechner vom Anzeigegerät und dessen Zubehör, insbesondere dessen Recheneinheit, unabhängige Systemkomponenten.

Die vorgeschlagene Prüfeinheit kann auch zur Rückverfolgung von Berührungseingaben direkt oder indirekt mit einem Datenlogger verbunden sein. Ein Datenschreiber kann auch in die Prüfeinheit integriert sein. Durch systematisches Abspeichern der ermittelten Prüfcodes wird ein datentechnisch effizientes Nachvollziehen der Bedienung eines Anzeigegeräts mit Berührungseingabe ermöglicht.

Die Erfindung eignet sich besonders als Erstausrüstung oder Nachrüstung für einen Führerstand, der ein Anzeigegerät mit Berührungseingabe aufweist, insbesondere für ein Triebfahrzeug im Schienenverkehr. Solche Führerstände können u.a. ein Multi-Funktions-Terminal umfassen, bspw. mit Fahrer-Fahrzeug-Schnittstelle für das ETCS oder CBTC System, das durch ein Anzeigegerät mit Berührungseingabe, bspw. ein Touchscreen bedienerfreundlicher und ggf. kostengünstiger wird. Durch Ausstattung mit der erfindungsgemäßen Vorrichtung wird das Bestätigen oder Verwerfen eines Werts, welcher als am Anzeigegerät mit Berührungseingabe eingegeben ermittelt wurde, ermöglicht und die Systemsicherheit somit deutlich erhöht.

Die Erfindung eignet sich ebenso für eine Vielzahl anderer Anwendungen in der Gefahren- und Zugriffssicherheit. So kann beispielsweise ein Steuerpult für ein Kraftwerk oder ein Stellwerk vorteilhaft mit einem erfindungsgemäß verbesserten Multi-Funktions-Terminal, sowohl als Erstausrüstung als auch als Nachrüstung, versehen werden. Allgemein eignet sich die Erfindung für jedes Multi-Funktions-Terminal umfassend ein Anzeigegerät mit Berührungseingabe zur Bedienung oder Steuerung eines Geräts, einer Maschine oder einer Anlage. So können beispielsweise auch fernbedienbare Geräte der Medizintechnik durch die Erfindung verbessert werden.

Ferner eignet sich die Erfindung auch für Endgeräte in Systemen mit Autorisierungs- bzw. Zugriffssicherheit, insbesondere für Bankgeschäfte. Anzeigegeräte mit Berührungseingabe finden zunehmend auch in diesem Bereich Einzug, etwa bei Bankautomaten. Hierbei erfolgt zur Autorisierung durch Berührung eine Eingabe, welche anhand eines oder mehrerer Prüfcodes verifiziert wird. Die Übertragung kann gegebenenfalls über einen unabhängigen und/oder sichereren Rückkanal erfolgen. Die Verifizierung kann wie zuvor durch einen Sicherheitsrechner erfolgen.

Besonders vorteilhaft wirkt im Bereich der Autorisierungssicherheit die Kombination mit einer zufällig angeordneten Darstellung graphischer Elemente, aus denen durch den Benutzer eine korrekte Auswahl in korrekter Folge zu treffen ist, wie etwa den Ziffern eines PIN-Codes anhand des Layouts einer Zifferntastatur. Die Prüfeinheit erstellt vollkommen unabhängig vom gewählten Layout des Angezeigten stets selektiv zu denjenigen Bildbereichen einen Prüfcode, welche vom Benutzer tatsächlich angewählt werden. Hierdurch kann die Sicherheit gegen Missbräuche durch Dritte, insbesondere gegen Skimming, deutlich erhöht werden. Zudem kann die Übermittlung der Prüfcodes aus der Prüfeinheit über einen sichereren und/oder beliebigen Rückkanal unabhängig vom vorliegenden System erfolgen, bspw. auch über ein Mobilfunkgerät des Benutzers. Eine Kenntnis der mit geeigneten Zufallsmechanismen generierten tatsächlichen Darstellung ist unter Ausnutzung der unmittelbar an die Berührungseingabe gebundene Prüfeinheit nachträglich im System nicht mehr erforderlich. Diese Kenntnis kann somit im Sinne einer Einweg-Verschlüsselung entfallen und demnach auch nicht von Dritten abgegriffen werden. Ferner kann durch zeitlich variable Codierparameter bzw. -verfahren oder durch sonstige Verschlüsselungstechnik vermieden werden, dass die Prüfcodes einen Rückschluss auf die geheime Kombination erlauben. Durch Zufallsdarstellung an der Anzeige, ggf. kombiniert mit kontrastarmen graphischen Elementen, lassen sich auch sonstige Missbräuche an derartigen Endgeräten reduzieren bzw. deutlich erschweren.

Weitere Einzelheiten, Vorteile und Merkmale der Erfindung lassen sich der nachfolgenden Figurenbeschreibung entnehmen, in der ein bevorzugtes Ausführungsbeispiel der erfindungsgemäßen Vorrichtung zur Durchführung des erfindungsgemäßen Verfahrens näher erläutert ist.

Die einzige Figur zeigt eine schematische Darstellung einer erfindungsgemäßen Vorrichtung zur sicherheitsrelevanten Eingabe über ein Anzeigegerät mit Berührungseingabe.

Eine Benutzerschnittstelle bzw. ein HMI (Human Machine Interface) ist in der Figur allgemein mit 10 bezeichnet. Das HMI 10 wird hier verstanden als ein System aus einer nicht sicheren darstellenden Recheneinheit 12 mit einem Anzeigegerät 14 mit Berührungsbildschirm. Das Anzeigegerät 14 kann insbesondere als TFT-Touchscreen ausgeführt sein und umfasst als integralen Bestandteil eine Erfassungskomponente, in der Figur allgemein mit 16 bezeichnet. Als Erfassungskomponente 16 kann insbesondere ein sog. Touch in geeigneter Technologie, z. B. ein resistives Touch oder kapazitives Touch, typischerweise in Form eines transparenten Foliensensors auf der darstellenden Fläche des Anzeigegeräts 14 vorgesehen sein. Die Erfassungskomponente 16 dient als Berührungssensor, typischerweise zur Erfassung von Koordinaten innerhalb der Ebene der Anzeige des Anzeigegeräts 14. Die Recheneinheit 12 weist einen Grafikcontroller 22 zur Ansteuerung des Anzeigegeräts 14 über eine Bilddatenleitung 24 auf. Die Erfassungskomponente 16 ist über eine Sensorleitung 26 mit einem Sensorcontroller 28 in der Recheneinheit 12 verbunden zum Ansteuern und Auslesen der Erfassungskomponente 16, so dass eine Berührungseingabe 20 in der Recheneinheit erfasst und verarbeitet werden kann. Die Berührungseingabe 20 kann insbesondere die Betätigung, bspw. das "Antippen", eines in der Anzeige des Anzeigegeräts 14 dargestellten Displayelements 18 umfassen. Das HMI 10 kann im Wesentlichen nach einem an sich bekannten Standardaufbau anhand eines PC als Recheneinheit 12 mit an sich bekannter Anzeigesoftware ausgeführt sein, welches Bedienelemente 18, wie Tasten, eine Tastatur oder andere graphische Elemente zur Bedienung (bzw. Bedienungsaufforderung) auf dem Anzeigegerät 14 aufweist. Ein Benutzer wird durch Drücken auf die Oberfläche der Anzeige bzw. der Erfassungskomponente 16 an der entsprechenden Stelle den zu dem jeweilig angezeigten Element zugehörigen Informationsgehalt bedienen bzw. die zugehörige Eingabe tätigen und übermitteln wollen. Typischerweise wird hierbei die Position der Berührung, z.B. in Form von x,y Koordinaten, durch den Sensorcontroller 28 bestimmt und somit in der Recheneinheit 12 einer Stelle der Darstellung und somit dem entsprechenden Bedienelement 18 in der Anzeige des Anzeigegeräts 14 zugeordnet. Eine geeignete Applikationssoftware setzt dementsprechend das Ereignis des Berührens, d.h. die Betätigung 20 in einen Informationsgehalt um (z. B. Druck auf dargestelltes Tastensymbol mit Aufschrift "D" bedeutet, der Informationsgehalt "D" wurde ausgewählt). Dieser Informationsgehalt wird typischerweise zur Weiterverarbeitung an einen Empfänger versendet, bspw. in der gezeigten Ausführung gemäß der Figur über einen Verbindungskanal 38 an einen Sicherheitsrechner 40.

Zwischen Auslese der Erfassungskomponente 16 und einem Empfänger, wie dem Sicherheitsrechner 40, liegen verschiedene potenzielle Fehlerquellen, die die tatsächlich eingegebene Information verfälschen könnten, so dass beispielsweise beim Empfänger nicht "D" sondern "B" ankommt. In sicherheitskritischen Anwendungen eines HMI 10, bspw. als Multi-Funktions-Terminal mit Fahrer-Fahrzeug-Schnittstelle (Driver-Machine-Interface) in einem Triebfahrzeug, könnte dieses gefährliche oder gar fatale Folgen haben.

Deshalb wird hier vorgeschlagen, eine weitere Auslese bzw. Auswertung der Erfassungskomponente 16 oder auch einer zusätzlich angebrachten Erfassungskomponente (nicht gezeigt) vorzunehmen, deren Ergebnis mittels eines unabhängigen Rückkanals ausgewertet wird. Das Auslesen bzw. Auswerten erfolgt hierbei vorzugsweise vollkommen separat und unabhängig, d.h. redundant. Zudem wird vorgeschlagen eine der ausgelesenen Bedienung entsprechende Signatur bzw. einen Prüfcode zu erzeugen ("A3F5d1xh" in der Figur).

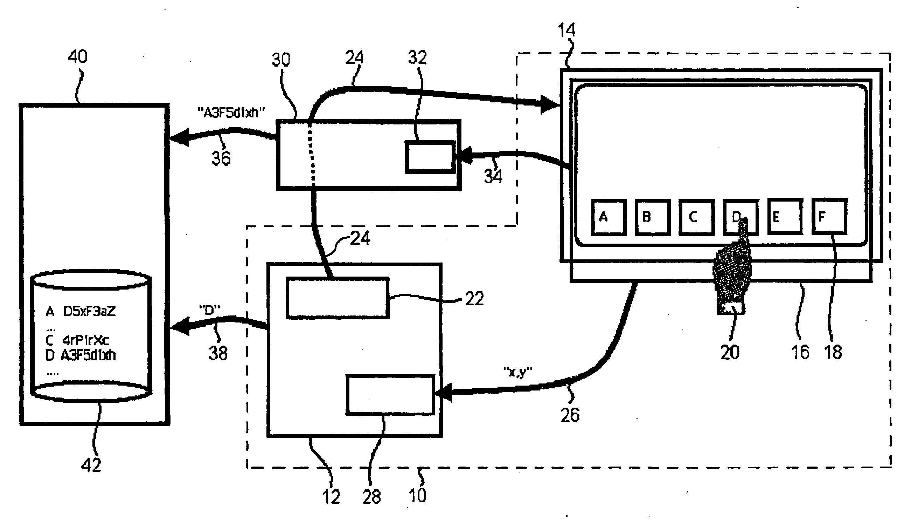

Hierzu wird erfindungsgemäß eine Prüfeinheit 30 vorgesehen und, wie aus FIG. 1 ersichtlich, einerseits mit der Bilddatenleitung 24 verbunden und andererseits über einen Auslesekanal 34 mit der Erfassungskomponente 16 oder ggf. einem zusätzlichen Berührungssensor verbunden. Die Prüfeinheit 30 kann unmittelbar in der Bilddatenleitung 24 vorgesehen werden oder aber über eine Abhörleitung (nicht gezeigt) hiermit verbunden sein. Entsprechend kann als Auslesekanal 34 für die Prüfeinheit 30 die Sensorleitung 26 genutzt werden, vorzugsweise wird jedoch ein Auslesekanal 34 in Form einer weiteren unabhängigen Leitung vorgesehen, um ein vollkommen unabhängiges Auswerten der integrierten Erfassungskomponente 16 bzw. einer zusätzlichen Erfassungskomponente zu erzielen.

Eine Berührungseingabe 20 am Anzeigegerät 14 wird somit, anhand eines entsprechenden Funktionsblocks 32 ebenfalls durch die erfindungsgemäße Prüfeinheit 30 ausgewertet, jedoch nicht zur Erfassung bestimmter Koordinaten, sondern dahingehend, dass der Berührungseingabe 20 und somit einem Displayelement 18 in der Anzeige ein bestimmter Überwachungsbereich zugeordnet und in der Prüfeinheit 30 aktiviert wird. Der Funktionsblock 32 hat somit die Funktion, einen bestimmten Überwachungsbereich auszuwählen, nämlich denjenigen Teilbereich der Anzeige, innerhalb dessen die ermittelte Berührungseingabe 20 erfolgte. Hierzu kann bspw. ein relativ grobmaschiges Raster verwendet werden, das die Anzeige des Anzeigegeräts 14 in rechteckige Sektoren bzw. Bildkacheln unterteilt. Dieses ermöglicht ferner im Falle einer zusätzlichen Erfassungskomponente, eine günstigere Sensortechnik einzusetzen. In einem entsprechenden Raster von Überwachungsbereichen und bei geeignet formatierter Anzeige entspricht jedes Bildschirmsymbol bzw. Displayelement 18 (z.B. "Taste D" in FIG.1) einem einzigen rechteckigen Rasterelement. Dieses steht in fester relativer Lage zum angezeigten Displayelement 18. Die Anzeige der grafischen Elemente durch die Recheneinheit 12 wird dementsprechend zum Erhalt der Verfügbarkeit in einem bestimmten Raster erfolgen, welches dem Raster der durch die Prüfeinheit 30 selektierbaren Überwachungsbereiche entspricht.

Aufgrund des durch den Funktionsblock 32 ausgewählten Überwachungsbereichs erzeugt die Prüfeinheit 30 für diesen Teilbereich der Anzeige, d.h. für das dortige Displayelement 18 und somit für die getätigte Eingabe, eine entsprechende Signatur bzw. einen entsprechenden eineindeutigen Prüfcode (z.B. "A35d1xh" in der Figur).

Dieser Prüfcode wird anhand eines Codekanals 36 an den Empfänger übermittelt, in der Figur durch einen Sicherheitsrechner 40 dargestellt. Durch die erfindungsgemäße Prüfeinheit 30 zusammen mit dem Auslesekanal 34 und dem Codekanal 36 wird somit ein unabhängiger Rückkanal mit erhöhter Sicherheit und ggf. erhöhter Verfügbarkeit ermöglicht.

Der Sicherheitsrechner 40 ist ebenfalls in bekannter Art über einen Verbindungskanal 38 mit dem HMI 10 verbunden. Zur erhöhten Sicherheit kann der Sicherheitsrechner 40 anhand der Signatur bzw. des Prüfcodes, welcher von der Prüfeinheit 30 übermittelt wurde, einen Vergleich zum Informationsgehalt einer herkömmlichen Rückmeldung bzw. eines durch die Recheneinheit 12 als eingegeben ermittelten Werts durchführen, um mögliche Fehler zu erkennen. Wird beispielsweise durch die Recheneinheit 12 ein anderer Wert als erfasst zurückgegeben als derjenige Wert, welcher dem durch die Prüfeinheit erzeugten Prüfcode entspricht, so wird dieser Fehler für den Empfänger erkennbar, beispielsweise im Sicherheitsrechner 40. Zum vorgenannten Vergleich wird im Sicherheitsrechner 40 ein dem Prüfcode entsprechender Vergleichswert ermittelt, welcher typischerweise dem im Überwachungsbereich angezeigten Displayelement 18 entspricht, welches durch die Prüfeinheit 30 "codiert" bzw. "signiert" wurde. Dieses kann effizient bspw. mittels einer im Sicherheitsrechner 40 abgelegten Lookup-Tabelle 42 erfolgen. Das Vergleichsergebnis ermöglicht vielerlei sicherheitsgerichtete Reaktionen, insbesondere jedoch das Bestätigen oder, im Fehlerfall, das Verwerfen des von der Recheneinheit 12 als eingegeben ermittelten Wertes. Die Reaktion an sich kann in der Recheneinheit 12, und/oder im Sicherheitsrechner 40 oder an sonstiger Stelle des Systems erfolgen.

Als Codiertechnik für das Erzeugen von Prüfcodes zu Bilddaten wird in der Prüfeinheit vorzugsweise eine Lösung gemäß WO 2011/003872 A1 eingesetzt, welche charakteristische und eineindeutige Signaturen für das angezeigte und durch den Bediener per Bedienungseingabe 20 ausgewählte Displayelement 18 erzeugt. Die entsprechende Offenbarung der WO2011/003872 betreffend das Codierverfahren an sich wird per Verweis hierin einbezogen.

Die Vorrichtung gemäß der Figur kann auch dazu genutzt werden, den von der Prüfeinheit 30 übermittelten Prüfcode anstelle des Ergebnisses aus der Recheneinheit 12 zu nutzen, um zu erkennen, welche Eingabe getätigt wurde bzw. welches Displayelement 18 bedient wurde. Der zurückgelieferte Prüfcode wird in diesem Fall nicht zum Vergleich genutzt, sondern, bspw. über die Lookup-Tabelle 42 in den Wert (bspw. "Taste D") übersetzt, welcher das System dann als eingegebenen Wert weiterverarbeitet.

Zur erhöhten Absicherung gegen zufällige Ereignisse, die z.B. durch die Erfassungskomponente 16 ausgelöst werden können, oder aber zum Sichtbarmachen und Bestätigen der Tastenbedienung für den Benutzer, kann die Nutzung des vorgeschlagenen Verfahrens wie folgt erweitert werden:

Der Bediener betätigt ein zunächst in einem ersten Zustand (bspw. "Taste nicht gewählt" bzw. "Taste nicht gedrückt") angezeigtes Displayelement 18 ("Taste D") auf dem Anzeigegerät 14. Die Prüfeinheit 30, insbesondere der Funktionsblock 32, setzt entsprechend den Überwachungsbereich und generiert entsprechend der graphischen Darstellung des Displayelements 18 im ersten Zustand einen Prüfcode. Der Prüfcode für den ersten Zustand wird an den Sicherheitsrechner 40 übermittelt. Dieser prüft die Korrektheit der Eingabe durch Vergleich oder nutzt diese direkt als Eingabe, wie oben erläutert, und sendet eine Empfangsbestätigung an das HMI 10. Das HMI 10 verändert daraufhin die Anzeige des Displayelements 18 vom ersten Zustand in einen zweiten Zustand (bspw. "Taste angewählt" bzw. "Taste gedrückt"). Auch der hierzu entsprechende Code wird von der Prüfeinheit 30 in Folge erzeugt und an den Sicherheitsrechner 40 übermittelt, bspw. anhand einer entsprechenden verzögerten Wiederholung der Codierung, ohne Verwendung des Funktionsblocks 32. Hierdurch kann der Sicherheitsrechner 40 die Bestätigung überwachen, und ggf. erst dann den gewünschten Bedienvorgang als korrekt abschließen.

Alternativ oder ergänzend zur Erzeugung einer sicherheitsgerichteten Reaktion kann die Prüfeinheit 30 auch bspw. über den Codekanal 36 mit einem Datenlogger bzw. Datenschreiber (nicht gezeigt) verbunden werden, welcher durch Aufzeichnen der Prüfcodes die Bedienung am Anzeigegerät 14 für die Rückverfolgung der erfolgten Berührungseingaben 20 ermöglicht.

In einer weiteren Ausgestaltung kann vorgesehen sein, dass der Sicherheitsrechner 40, im Gegensatz zur typisch interrupt- und/oder prioritätsbasiert betriebenen Recheneinheit 12, echtzeitfähig ausgeführt ist. Echtzeitfähigkeit ist vorliegend definiert als die Fähigkeit, eine bestimmte Aufgabe immer und unbedingt innerhalb einer bestimmten maximalen Zeitdauer abschließen zu können.

In echtzeitkritischen Anwendungen kann unter Ausnutzung der erfindungsgemäßen Prüfeinheit 30 im Sicherheitssystem 40 ein als dem Prüfcode entsprechend ermittelter Eingabewert nicht nur zu Sicherheitszwecken, sondern auch für echtzeitkritische Zwecke weiterverwendet werden. Eine mögliche echtzeitkritische Anwendung wäre etwa das Auslösen bestimmter Fahrzeugfunktionen, die nicht zwingend sicherheitsrelevant sind. Da die Zeitdauer zur Erzeugung von Prüfcodes und zur Ermittlung der entsprechenden Eingabewerte verhältnismäßig kurz ausfallen kann, eignet sich die erfindungsgemäße Vorrichtung für echtzeitkritische Funktionen, die von der konventionellen Recheneinheit 12 nicht ohne weiteres gewährleistet werden können. Die Echtzeitfunktion kann ergänzend oder auch alternativ zur Sicherheitsfunktion sowie durch Erstausrüstung oder durch Nachrüstung erzielt werden.

Als weiterer Aspekt kann vorgesehen sein, dass gewisse Fehler, insbesondere Kalibrierfehler, beim Auslesen 34 der Erfassungskomponente 16 erkannt und/oder vermieden werden. Bestimmte Typen von Erfassungskomponenten/-sensoren 16 haben einen Fehlermodus, in dem der Berührungspunkt systematisch falsch ausgegeben wird. Solche Fehler können insbesondere durch analoges Auslesen von z.B. Widerstandswerten zur Erfassung der X- und Y-Koordinaten der Position der Berührung bedingt sein. So kann beispielsweise statt der tatsächlichen Position x,y durchgehend fälschlicherweise die Ausgabe x+Offset1 y+Offset2 erfolgen, wobei "Offset1" und "Offset2" systematische Kalibrier- oder Messfehler darstellen.

Hierdurch könnten sowohl das HMI 10 als auch der Sicherheitsrechner 40 über beide getrennte Kanälen gleichermaßen einen ungewollten Informationsgehalt identifizieren, insbesondere dann, wenn die Auslesung für die Prüfeinheit 30 anhand der am Auslesekanal 34 angeschlossenen Erfassungskomponente 16 und nicht ahnand eines weiteren unabhängigen Berührungssensors (nicht gezeigt) erfolgt. Ein solcher "Common Mode Fehler" kann auch auftreten, wenn zwei getrennte aber identische hergestellte Sensoren als Erfassungskomponente 16 und als unabhängiger Berührungssensor eingesetzt werden.

Um derartige Fehler zu erfassen und ggf. auch zu kompensieren, kann die Kalibirierung kontrolliert bzw. überprüft werden. Dies kann dadurch erfolgen, dass bei Systeminitialisierung und ggf. auch zyklisch nach gewissen Zeitabständen, etwa im Rahmen der Wartung, ein Test- oder Kontrollablauf abgearbeitet wird. Im Kontrollablauf zeigt die Anzeige in einer fest vorgegebenen Reihe von Teilbereichen nacheinander vom Benutzer zu bedienende Prüfelemente an. Die entsprechende Bedienung wird vom Sicherheitsrechner 40 dadurch kontrolliert, dass der Sicherheitsrechner 40 den Empfang einer zeitlichen Folge von Prüfcodes kontrolliert, welche der vordefinierten angezeigten Reihe von Bedienelementen entsprechen muss. Wird die korrekte Folge von Prüfcodes im Sicherheitsrechner 40 festgestellt, wird der Kontrollablauf als erfolgreich quittiert und eine korrekte Funktionsfähigkeit (ohne Kalibrierfehler) der Erfassungskomponente 16 und/oder des unabhängigen Berührungssensors ist sichergestellt.

Alternativ oder ergänzend können Erfassungsfehler dadurch vermieden werden, dass zu erfassende sicherheitskritische Bedienelemente ausschließlich in jeweiligen voneinander in beiden Richtungen der X- und Y-Koordinaten durch einen ausreichenden Sicherheitsabstand dx, dy beabstandeten Teilbereichen am Anzeigegerät 14 angezeigt werden. Der Sicherheitsabstand in beiden Koordinatenrichtungen dx, dy ist jeweils größer zu wählen als der entsprechende größtmögliche Kalibrierfehler, d.h. dx > max(Offset1) und dy > max (Offset2) für die verwendete Erfassungskomponente 16. Bei unabhängiger, zusätzlicher Erfassungskomponente von unterschiedlichem Typ ist jeweils der größtmögliche Kalibrierfehler zu betrachten. Die letztgenannte Ausführung eignet sich vor allem für Anwendungen, in denen sich die sicherheitsrelevante Dateneingabe auf wenige auswählbare Elemente beschränkt, d.h. falls die sicherheitsrelevante Dateneingabe nur verhältnismäßig geringen Flächenbedarf am Anzeigegerät 14 hat.

Als weiteres Ausführungsbeispiel sei abschließend erläutert, wie sich ein in der Figur gezeigtes HMI 10 mit erfindungsgemäßer Prüfeinheit 30 auch zur Anwendung in Bereichen der Zugriffssicherheit eignet. Zumindest die Recheneinheit 12 und das Anzeigegerät 14 sind hierbei Teil eines gegebenenfalls unsicheren Bankautomaten (Engl. ATM) zum Geldabheben oder zur Ausführung sonstiger Bankgeschäfte.

Als Displayelement 18 erzeugt die Recheneinheit 12 am Touchscreen 14 unter anderem Zifferntasten eines Nummernblocks zur Eingabe einer PIN des Benutzers. Hierbei erfolgt die Anordnung der Displayelemente 18 für jede neue Eingabe rein zufällig und nach vorab nicht bekanntem Aufbau. Demnach ist auch grundsätzlich eine exakte Wiederholung des gleichen Layouts der Displayelemente 18, hier etwa Zifferntasten 0-9, am Touchscreen 14 zumindest innerhalb einer begrenzten Zeit ausgeschlossen. Schon dadurch wird das bekannte Risiko eines missbräuchlichen Abgriffs an der eigentlichen ZiffernTastatur, bspw. durch Überkleben einer Sensorfolie vermieden.

Die Berührungseingabe 20 erfolgt durch einen aufmerksamen Benutzer entsprechend der aktuell angezeigten Anordnung der Displayelemente 18. Über den Auslesekanal 34 unmittelbar an der Erfassungskomponente 16 und den Funktionsblock 32 erfasst die Prüfeinheit 30 den Überwachungsbereich zum tatsächlich betätigten Displayelement 18. Somit wird gänzlich unabhängig von der gewählten rein zufälligen Anordnung bzw. vom Layout der Anzeige, inhärent von der Prüfeinheit 30 ein Prüfcode erstellt, der dem tatsächlich vom Benutzer angewählten Displayelement 18 entspricht. Eine Kenntnis der im jeweiligen Einzelfall erfolgten Darstellung am Touchscreen 14 muss somit weder in der Recheneinheit 12 noch im Sicherheitsrechner 40 vorliegen. Diese nachträgliche Kenntnis sollte zur Steigerung der Sicherheit auch vermieden werden.

Die von der Prüfeinheit 30 ermittelten Prüfcodes werden dann zur eindeutigen Ermittlung der erfolgten PIN-Eingabe genutzt und beispielsweise über einen unabhängigen, sicheren Codekanal 36 an den Sicherheitsrechner 40 der Bank oder des Karteninstituts übermittelt. Als Rückkanal 36 könnte auch ein vom Bankautomaten unabhängiger Kanal, etwa ein GSM-Mobilfunkkanal über das Mobiltelefon des Benutzers genutzt werden. Die nach jetzigem Stand der Technik übliche Erfassung der erfolgten Berührungseingabe 20 durch die möglicherweise manipulierte Recheneinheit 12 des Bankautomaten ist, zumindest hinsichtlich des PIN, somit nicht lich und kann demnach auch nicht abgegriffen bzw. abgehört werden.

Ähnlich dem zuvor beschriebenen Ausführungsbeispiel kann die Prüfeinheit 30 in erfindungsgemäßer Anordnung auch analog zur Sicherheitserhöhung sonstiger Dateneingaben, etwa bei Internet-Geschäften wie Online-Banking genutzt werden.

### Bezugszeichenliste

- 10: Human-Machine-Interface
- 12: Recheneinheit
- 14: Anzeigegerät mit Berührungseingabe (bspw. Touchscreen)
- 16: Erfassungskomponente/Sensor (bspw. Touch)
- 18: Displayelement
- 20: Berührungseingabe
- 22: Grafikcontroller
- 24: Bilddatenleitung (bspw. LVDS)
- 26: Sensorleitung
- 28: Sensorcontroller
- 30: Prüfeinheit
- 32: Funktionsblock ("Bereichsauswahl")
- 34: Auslesekanal
- 36: Codekanal
- 38: Verbindungskanal
- 40: Sicherheitsrechner
- 42: Lookup-Tabelle

## Patentansprüche

1. Verfahren für eine sicherheitsrelevante Eingabe über ein Anzeigegerät mit Berührungseingabe, insbesondere über ein Touchscreen, wobei das Verfahren umfasst:
Übertragung von Bilddaten über eine Bilddatenleitung (24) von einer Recheneinheit (12) an ein Anzeigegerät (14) mit einer Erfassungskomponente (16) zur Erfassung unterschiedlicher Berührungseingaben an der Anzeige;
Ermittlung einer Berührungseingabe (20) durch Auslesen (26) der Erfassungskomponente;
**gekennzeichnet durch**
Auslesen (34) der Erfassungskomponente (16) des Anzeigegeräts oder einer zusätzlichen Erfassungskomponente zur Auswahl eines Überwachungsbereichs **durch** eine mit der Bilddatenleitung (24) verbundene Prüfeinheit (30), wobei der Überwachungsbereich demjenigen Teilbereich entspricht, innerhalb dessen die ermittelte Berührungseingabe (20) erfolgte;
Erstellen eines Prüfcodes in der Prüfeinheit (30) für denjenigen Teil der Bilddaten, die zur Anzeige im Überwachungsbereich vorgesehen sind; und
Ausgabe bzw. Auslesen des **durch** die Prüfeinheit (30) erstellten Prüfcodes, insbesondere zwecks Veranlassung einer sicherheitsgerichteten Reaktion.

2. Verfahren nach Anspruch 1, **gekennzeichnet durch** Übermittlung (38) eines Werts, welcher **durch** die Recheneinheit (12) als **durch** Berührungseingabe am Anzeigegerät eingegeben ermittelt wurde, an einen Sicherheitsrechner (40);
Übermittlung (36) des **durch** die Prüfeinheit (30) erstellten Prüfcodes an den Sicherheitsrechner; Ermitteln eines dem Prüfcode entsprechenden Vergleichswerts, vorzugsweise anhand einer Lookup-Tabelle (42), im Sicherheitsrechner (40);
Vergleich des als eingegeben ermittelten Werts mit dem Vergleichswert zur Bildung eines positiven oder negativen Vergleichsergebnisses zwecks Veranlassung einer sicherheitsgerichteten Reaktion, insbesondere zum Verwerfen des als eingegeben ermittelten Werts in der Recheneinheit und/oder im Sicherheitsrechner.

3. Verfahren nach Anspruch 2, **gekennzeichnet durch** Anzeigen eines Betätigungselements in einem ersten Zustand am Anzeigegerät;
Ermittlung einer Betätigung des Betätigungselements **durch** Berührungseingabe am Anzeigegerät **durch** Auslesen der Erfassungskomponente;
Auswahl des Überwachungsbereichs, innerhalb dessen die Berührungseingabe erfolgte **durch** die Prüfeinheit; Übermitteln eines ersten Prüfcodes, welcher dem Betätigungselement im ersten Zustand entspricht, das im Überwachungsbereich angezeigt wird, an den Sicherheitsrechner;
Anzeigen des Betätigungselements in einem zweiten Zustand innerhalb des Überwachungsbereichs am Anzeigegerät;
Übermitteln eines zweiten Prüfcodes, welcher dem Betätigungselement im zweiten Zustand entspricht, das im Überwachungsbereich angezeigt wird, an den Sicherheitsrechner;
Prüfen, ob zum empfangenen ersten Prüfcode der entsprechende zweite Prüfcode im Sicherheitsrechner empfangen wird zwecks Veranlassung einer sicherheitsgerichteten Reaktion, insbesondere zum Bestätigen oder Verwerfen des von der Recheneinheit als eingegeben ermittelten Werts in der Recheneinheit und/oder im Sicherheitsrechner.

4. Verfahren nach Anspruch 1 oder 2, **gekennzeichnet durch** Ermitteln eines dem Prüfcode entsprechenden Eingabewerts, vorzugsweise anhand einer Lookup-Tabelle; Nutzen des dem Prüfcode entsprechenden Eingabewerts als eingegebener Wert in der Recheneinheit und/oder im Sicherheitsrechner, insbesondere für eine echtzeitkritische Anwendung auf dem Sicherheitsrechner (40).

5. Verfahren nach einem der Ansprüche 1 bis 4, **gekennzeichnet durch** Ausführen eines Ablaufs umfassend:
sequentielles Auslesen (34) der Erfassungskomponente zur Auswahl mehrerer Überwachungsbereiche **durch** die Prüfeinheit (30), wobei jeder Überwachungsbereich der Sequenz demjenigen Teilbereich entspricht, innerhalb dessen eine von mehreren aufeinander folgenden Berührungseingaben (20) erfolgte;
Erstellen eines jeweiligen Prüfcodes in der Prüfeinheit (30) zu jedem Überwachungsbereich in der Sequenz; und Ausgabe bzw. Auslesen einer Folge von erstellten Prüfcodes.

6. Verfahren nach Anspruch 5, **gekennzeichnet durch** Ausführen des Ablaufs zur Ermittlung möglicher Kalibrierfehler beim Auslesen (34) der Erfassungskomponente (16) und/oder der zusätzlichen Erfassungskomponente, wobei die Anzeige in einer fest vorgegebenen Reihe von Teilbereichen zu bedienende Prüfelemente anzeigt und der Sicherheitsrechner (40) den Empfang einer entsprechenden Folge von Prüfcodes kontrolliert.

7. Verfahren nach einem der Ansprüche 1 bis 6, **gekennzeichnet durch** eine zeitlich variable, vorzugsweise zufällige, Anordnung von bestimmten graphischen Displayelementen (18) in der Anzeige zwecks entsprechender Berührungseingaben anhand der Anzeige.

8. Vorrichtung für eine sicherheitsrelevante Eingabe umfassend
ein Anzeigegerät (14) mit Berührungseingabe, insbesondere über ein Touchscreen, mit einer Erfassungskomponente (16) zur Erfassung unterschiedlicher Berührungseingaben (20) an der Anzeige;
eine Bilddatenleitung (24) zur Übertragung von Bilddaten von einer Recheneinheit (12) an das Anzeigegerät (14);
**gekennzeichnet durch**
eine mit der Bilddatenleitung (24) verbundene Prüfeinheit (30), welche mit der Erfassungskomponente (16) des Anzeigegeräts oder mit einer zusätzlichen Erfassungskomponente verbunden (34) ist zur Auswahl eines Überwachungsbereichs, wobei der Überwachungsbereich demjenigen Teilbereich entspricht, innerhalb dessen eine Berührungseingabe (20) erfolgte; und
geeignet ist zum Erstellen eines Prüfcodes für denjenigen Teil der Bilddaten, die zur Anzeige im Überwachungsbereich vorgesehen sind, und zur Ausgabe bzw. zum Auslesen des erstellten Prüfcodes, insbesondere zwecks Veranlassung einer sicherheitsgerichteten Reaktion.

9. Vorrichtung nach Anspruch 8, **gekennzeichnet durch** einen Sicherheitsrechner (40), insbesondere einen echtzeitfähigen Sicherheitsrechner (40), welcher mit der Recheneinheit (12) verbunden (38) ist zum Empfang der Übermittlung eines Werts, welcher **durch** die Recheneinheit als **durch** Berührungseingabe am Anzeigegerät eingegeben ermittelt wurde, und mit der Prüfeinheit (30) verbunden (36) ist zur Übermittlung des **durch** die Prüfeinheit erstellten Prüfcodes an den Sicherheitsrechner, wobei der Sicherheitsrechner geeignet ist zum Ermitteln eines dem Prüfcode entsprechenden Vergleichswerts, vorzugsweise anhand einer Lookup-Tabelle (42).

10. Vorrichtung nach Anspruch 9, **gekennzeichnet durch** Mittel zum Vergleich des als eingegeben ermittelten Werts mit dem Vergleichswert zur Bildung eines positiven oder negativen Vergleichsergebnisses zwecks Veranlassung einer sicherheitsgerichteten Reaktion, insbesondere zum Verwerfen des als eingegeben ermittelten Werts in der Recheneinheit und/oder im Sicherheitsrechner.

11. Vorrichtung nach Anspruch 10, **gekennzeichnet durch** Mittel im Sicherheitsrechner (40) zum Prüfen, ob zu einem von der Prüfeinheit (30) empfangenen ersten Prüfcode ein entsprechender zweiter Prüfcode von der Prüfeinheit (30) empfangen wird zwecks Veranlassung einer sicherheitsgerichteten Reaktion, insbesondere zum Bestätigen oder Verwerfen des von der Recheneinheit (12) als eingegeben ermittelten Werts in der Recheneinheit und/oder im Sicherheitsrechner.

12. Vorrichtung nach einem der Ansprüche 8 bis 11, **dadurch gekennzeichnet, dass** die Prüfeinheit (30) und vorzugsweise der Sicherheitsrechner (40) als von der Recheneinheit (12) des Anzeigegeräts unabhängige Systemkomponente(n) ausgeführt ist/sind.

13. Vorrichtung nach einem der Ansprüche 8 bis 12, **dadurch gekennzeichnet, dass** die Prüfeinheit (30) mit einem Datenlogger verbunden ist zum Abspeichern ermittelter Prüfcodes.

14. Vorrichtung nach einem der Ansprüche 8 bis 13, **dadurch gekennzeichnet dass**, zur sicherheitserhöhenden Redundanz,
eine zusätzliche Erfassungskomponente vorgesehen ist, mit welcher die Prüfeinheit (30) verbunden (34) ist zur Auswahl eines Überwachungsbereichs; und/oder die Erfassungskomponente(n) (16) mit zwei getrennten Ausleseschaltungen ausgestattet ist/sind, wobei die Prüfeinheit (30) mit einer anderen Ausleseschaltung verbunden ist als die Recheneinheit (12); und/oder mindestens zwei mit der Bilddatenleitung (24) verbundene Prüfeinheiten (30) vorgesehen sind, welche zur Auswahl des jeweiligen Überwachungsbereichs sowie zum Erstellen und Ausgeben bzw. Auslesen eines Prüfcodes zu den Bilddaten im jeweiligen Überwachungsbereich vorgesehen sind, angeordnet sind; und/oder
eine zur Parallelverarbeitung geeignete Prüfeinheit (30) vorgesehen ist, welche zu mehreren Überwachungsbereichen in Parallelverarbeitung Prüfcodes erstellen kann, umfassend insbesondere einen FPGA, einen DSP und/oder einen oder mehrere Mikrocontroller.

15. Führerstand für ein Fahrzeug, insbesondere für ein Triebfahrzeug, umfassend ein Multi-Funktions-Terminal (10), welches ein Anzeigegerät (14) mit Berührungseingabe aufweist, **gekennzeichnet durch** eine Vorrichtung nach einem der Ansprüche 8 bis 14 zum sicherheitsrelevanten Bestätigen oder Verwerfen eines Werts, welcher als am Anzeigegerät mit Berührungseingabe eingegeben ermittelt wurde.

16. Multi-Funktions-Terminal (10) zur Steuerung eines Geräts, einer Maschine oder einer Anlage, insbesondere Steuerpult für ein Stell- oder Kraftwerk, umfassend ein Anzeigegerät (14) mit Berührungseingabe, **gekennzeichnet durch** eine Vorrichtung nach einem der Ansprüche 8 bis 14 zum sicherheitsrelevanten Bestätigen oder Verwerfen eines Werts, welcher als am Anzeigegerät mit Berührungseingabe eingegeben ermittelt wurde.

17. Endgerät (10) für ein System mit Autorisierungssicherheit, insbesondere für Bankgeschäfte, umfassend ein Anzeigegerät (14) mit Berührungseingabe, **gekennzeichnet durch** eine Vorrichtung nach einem der Ansprüche 8 bis 14 zum sicherheitsrelevanten Bestätigen oder Verwerfen einer Eingabe zur Autorisierung, wobei die Eingabe am Anzeigegerät mit Berührungseingabe anhand eines oder mehrerer Prüfcodes, gegebenenfalls über einen sichereren Rückkanal, übermittelt und, insbesondere von einem Sicherheitsrechner, verifiziert wird.

## Claims

1. Method for safety-relevant input by means of a display device with touch input, in particular by means of a touch screen, the method comprising:
transmitting image data via an image data line (24) from a computer unit (12) to a display device (14) having an acquisition module (16) for acquiring different touch inputs on the display;
determining a touch input (20) by reading out (26) the acquisition module;
**characterized by**
reading out (34) the acquisition module (16) of the display device or an additional acquisition module for selecting a monitoring region by means of a test unit (30) that is connected to the image data line (24), wherein the monitoring region corresponds to that partial region, in which the determined touch input (20) occurred;
generating a test code in the test unit (30) for that part of image data which are to be displayed in the monitoring region; and
outputting resp. reading out the test code generated by the test unit (30), in particular in view of initiating a safety-focused reaction.

2. Method according to claim 1, **characterized by**
transmitting (38) a value, which has been determined by the computer unit (12) as entered on the display device by touch input, to a safety computer (40);
transmitting (36) the test code generated by the test unit (30) to the safety computer;
determining a reference value corresponding to the test code, in particular by means of a lookup-table (42), in the safety computer (40);
comparing the value that has been determined as entered with the reference value for forming a positive or negative result of comparison in view of initiating a safety-focused reaction, in particular for rejecting the value that has been determined as entered in the computer unit and/or in the safety computer.

3. Method according to claim 1, **characterized by** displaying a control element in a first state on the display device;
determining actuation of the control element by means of a touch input on the display device through reading out the acquisition module;
selecting the monitoring region, in which the touch input occurred by means of the test unit;
transmitting a first test code, which corresponds to the control element in the first state as displayed in the monitoring region, to the safety computer;
displaying the control element in a second state in the monitoring region on the display device;
transmitting a second test code, which corresponds to the control element in the second state as displayed in the monitoring region, to the safety computer;
checking whether a second test code is received that corresponds to the received first test code in the safety computer in view of initiating a safety focused reaction, in particular for confirming or for rejecting the value that the computer unit has determined as entered in the computer unit and/or in the safety computer.

4. Method according to claim 1 or 2, **characterized by** determining an input value corresponding to the test code, preferably by means of a lookup-table;
using the input value corresponding to the test code as an entered value in the computer unit and/or in the safety computer, in particular for a real time application on the safety computer (40).

5. Method according to one of claims 1 to 4, **characterized by** executing a sequence comprising:
sequentially reading out (34) the acquisition module for selecting several monitoring regions by means of the test unit (30), wherein each monitoring region of the sequence corresponds to that partial region, in which one of several consecutive touch inputs (20) occurred;
generating a respective test code in the test unit (30) for each monitoring region in the sequence; and
outputting resp. reading out a sequence of generated test codes.

6. Method according to claim 5, **characterized by** executing the sequence for determining possible calibration errors when reading out (34) the acquisition module (16) and/or the additional acquisition module, wherein the display displays test elements to be used in a predetermined series of partial regions and wherein the safety computer (40) verifies reception of a corresponding sequence of test codes.

7. Method according to one of claims 1 to 6, **characterized by** a time variable, preferably random, arrangement of certain graphical display elements (18) on the display in view of corresponding touch inputs using the display.

8. Device for safety-relevant input, comprising a display device (14) with touch input, in particular by means of a touch screen, with an acquisition module (16) for acquiring different touch inputs (20) on the display; an image data line (24) for transmitting image data from a computer unit (12) to the display device (14);
**characterized by**
a test unit (30) connected to the image data line (24) and connected to the acquisition module (16) of the display device or to an additional acquisition module for selecting a monitoring region, wherein the monitoring region corresponds to that partial region, in which a touch input (20) occurred; and
which is adapted for generating a test code for that part of the image data which are to be displayed in the monitoring region, and for outputting resp. reading out the generated test code, in particular in view of initiating a safety-focused reaction.

9. Device according to claim 8, **characterized by** a safety computer (40), in particular a real time-capable safety computer (40), which is connected to the computer unit (12) for receiving a transmitted value, which has been determined by the computer unit as entered on the display device by means of touch input, and which is connected with the test unit (30) for transmitting (36) the test code generated by the test unit to the safety computer, wherein the safety computer is adapted for generating a reference value corresponding to the test value, preferably by means of a lookup-table (42).

10. Device according to claim 9, **characterized by** means for comparing the value that has been determined as entered with a reference value for forming a positive or negative result of comparison in view of initiating a safety-focused reaction, in particular for rejecting the value that has been determined as entered in the computer unit and/or in the safety computer.

11. Device according to claim 10, **characterized by** means in the safety computer (40) for checking whether there is a second test code received from the test unit (30) that corresponds to a first test code received from the test unit (30) in view of initiating a safety-focused reaction, in particular for confirming or rejecting a value that the computer unit (12) has determined as entered in the computer unit and/or in the safety computer.

12. Device according to one of claims 8 to 11, **characterized in that** the test unit (30) and preferably the safety computer (40) is/are configured as system module(s) that are independent of the computer unit (12) of the display device.

13. Device according to one of claims 8 to 12, **characterized in that** the test unit (30) is connected to a data logger for saving determined test codes.

14. Device according to one of claims 8 to 13, **characterized in that** in view of redundancy that increases safety,
an additional acquisition module is provided, to which the test unit (30) is connected for selecting a monitoring region; and/or
the acquisition module(s)(16) is/are provided with two separate read out circuits, wherein the test unit (30) is connected to a different read out circuit from that of the computer unit (12); and/or
at least two test units (30) connected to the image data line (24) are provided, which are provided for selecting the respective monitoring region and for generating and outputting resp. reading out a test code for the image data in the respective monitoring region; and/or
at least one test unit (30) suitable for parallel processing is provided, which can generate test codes for several monitoring regions by parallel processing, in particular comprising an FPGA, a DSP and/or one or more microcontrollers.

15. Driver console for a vehicle, in particular for a railway traction vehicle, comprising a multi-function-terminal (10) that has a display device (14) with touch input, **characterized by** a device according to anyone of claims 8 to 14 for safety-relevant confirmation or rejection of a value that has been determined as entered on the display device with touch input.

16. Multi-function-terminal (10) for controlling a device, a machine or an installation, in particular a control panel for a railway control center or a power station, comprising a display device (14) with touch input, **characterized by** a device according to anyone of claims 8 to 14 for safety-relevant confirmation or injection of a value that has been determined as entered on the display device with touch input.

17. Terminal (10) for a system with authorization security, in particular for banking transactions, comprising a display device (14) with touch input, **characterized by** a device according to anyone of claims 8 to 14 for safety-relevant confirmation or rejection of input for authorization, wherein input on the display device with touch input is transmitted using one or several test codes, in particular via a safety return channel, and is verified, in particular by a safety computer.

## Revendications

1. Procédé pour une saisie sécurisée par l'intermédiaire d'un dispositif d'affichage à saisie tactile, notamment d'un écran tactile, le procédé comprenant:
transmission de données d'image par une ligne de données d'image (24) d'une unité de calcul (12) vers un dispositif d'affichage (14) ayant un composant de détection (16) pour détecter différentes saisies tactiles sur l'affichage;
détermination d'une saisie tactile (20) par lecture (26) du composant de détection;
**caractérisé par**
lecture (34) du composant de détection (16) appartenant au dispositif d'affichage ou d'un composant de détection supplémentaire pour la sélection d'une région de surveillance au moyen d'une unité de contrôle (30) reliée avec la ligne de données d'image, la région de surveillance correspondant à une sous-région dans laquelle la saisie tactile déterminée (20) a été effectuée;
génération d'un code de contrôle dans l'unité de contrôle (30) pour la partie des données d'image destinées à être affichées dans la région de surveillance, et
sortie resp. lecture du code de contrôle généré par l'unité de contrôle (30), en particulier afin d'entraîner une réaction destinée à la sécurité.

2. Procédé selon la revendication 1, **caractérisé par**
transmission (38) d'une valeur qui a été déterminée par l'unité de calcul (12) comme étant saisie, par saisie tactile sur le dispositif d'affichage, à un processeur de sécurité (40);
transmission (36) du code de contrôle généré par l'unité de contrôle (30) au processeur de sécurité;
détermination d'une valeur de référence correspondant au code de contrôle, de préférence en utilisant une table de correspondance (42), dans le processeur de sécurité (40); comparaison de la valeur déterminée comme étant saisie avec la valeur de référence pour former un résultat positif ou négatif de comparaison afin d'entraîner une réaction destinée à la sécurité, en particulier pour rejeter la valeur déterminée comme étant saisie dans l'unité de calcul et/ou dans le processeur de sécurité.

3. Procédé selon la revendication 2 , **caractérisé par** l'affichage d'un élément d'actionnement dans un premier état sur le dispositif d'affichage;
détermination d'un actionnement de l'élément d'actionnement par saisie tactile sur le dispositif d'affichage par lecture du composant de détection;
sélection de la région de surveillance à l'intérieur de laquelle la saisie tactile a été effectuée, par l'unité de contrôle;
transmission d'un premier code de contrôle, qui correspond à l'élément d'actionnement dans un premier état tel qu'affiché dans la région de surveillance, au processeur de sécurité;
affichage de l'élément d'actionnement dans un deuxième état à l'intérieur de la région de surveillance sur le dispositif d'affichage;
transmission d'un deuxième code de contrôle, qui correspond à l'élément d'actionnement dans le deuxième état tel qu'affiché dans la région de surveillance, au processeur de sécurité;
vérification qu'il est reçu parle processeur de sécurité un deuxième code de contrôle correspondant au premier code de contrôle afin d'entraîner une réaction destinée à la sécurité, en particulier pour confirmer ou rejeter la valeur déterminée par l'unité de calcul comme saisie au sein de l'unité de calcul et/ou le processeur de sécurité.

4. Procédé selon la revendication 1 ou 2, **caractérisé par**
détermination d'une valeur de saisie correspondant au code de contrôle, de préférence en utilisant une table de correspondance;
utilisation de la valeur de saisie correspondant au code de contrôle en tant que valeur saisie dans l'unité de calcul et/ou dans le processeur de sécurité, en particulier pour une application critique en temps réel sur le processeur de sécurité (40).

5. Procédé selon l'une des revendications 1 à 4, **caractérisé par** l'exécution d'une séquence comprenant:
lecture séquentielle (34) du composant de détection pour la sélection de plusieurs régions de surveillance par l'unité de contrôle (30), chaque région de surveillance de la séquence correspondant à la sous-région, à l'intérieur de laquelle une des plusieurs saisies tactiles successives (20) a été effectuée;
génération d'un code de contrôle respectif dans l'unité de contrôle (30) pour chaque région de surveillance dans la séquence, et
sortie resp. lecture d'une succession de codes de contrôle générés.

6. Procédé selon la revendication 5, **caractérisé par** l'exécution de la séquence pour déterminer des erreurs potentielles de calibration lors de la lecture (34) du composation de détection (16) et/ou du composant de détection supplémentaire, dans lequel l'affichage affiche en une série prédéterminée de sous-régions des éléments de vérifiaction et le processeur de sécurité (40) vérifie la réception d'une succession correspondante de codes de contrôle.

7. Procédé selon l'une des revendications 1 à 6, **caractérisée par** un arrangement variable dans le temps, de préférence aléatoire, de certains éléments d'affichage graphiques (18) sur l'affichage afin de saisies tachties correspondantes au moyen de l'affichage.

8. Dispositif de saisie sécurisée, comprenant
un dispositif d'affichage (14) à saisie tactile, notamment un écran tactile, ayant un composant de détection (16) pour détecter différentes saisies tactiles sur l'affichage;
une ligne de données d'image (24) pour transmettre des données d'image à partir d'une unité de calcul (12) vers le dispositif d'affichage (14);
**caractérisé par**
une unité de contrôle (30) reliée avec la ligne de données d'image (24) et qui est reliée au composant de détection (16) du dispositif d'affichage ou reliée avec un composant de détection supplémentaire (34) pour sélectionner une région de surveillance, la région de surveillance correspondant à la sous-région, dans laquelle une saisie tactile (20) a été effectuée, et
qui est adaptée pour générer un code de contrôle pour la partie des données d'image, qui sont destinées à être affichées dans la région de surveillance, et de sortir resp. faire lire le code de contrôle généré, en particulier afin d'entraîner une réaction destinée à la sécurité.

9. Dispositif selon la revendication 8, **caractérisé par** un processeur de sécurité (40), en particulier un processeur de sécurité à temps réel (40), qui est relié (38) à l'unité de calcul (12) pour recevoir la transmission d'une valeur, qui est déterminée par l'unité de calcul comme étant saisie par saisie tactile sur le dispositif d'affichage, et relié (36) à l'unité de contrôle (30) pour transmettre le code de contrôle fourni par l'unité de contrôle au processeur de sécurité, le processeur de sécurité étant adapté pour déterminer une valeur de référence correspondant au code de contrôle, de préférence au moyen d'une table de correspondance (42).

10. Dispositif selon la revendication 9, **caractérisé par** des moyens pour comparer la valeur déterminée comme étant saisie à la valeur de référence pour former un résultat de comparaison positif ou négatif afin d'entraîner une réaction destinée à la sécurité, en particulier pour rejeter la valeur déterminé comme étant saisie au sein de l'unité de calcul et/ou au sein du processeur de sécurité.

11. Dispositif selon la revendication 10, **caractérisé par** des moyens de vérification au sein du processeur de sécurité (40), permettant de vérifier s'il est reçu de la part de l'unité de contrôle (30) un deuxième code de contrôle correspondant à premier code de contrôle reçu de la part de l'unité de contrôle (30), afin d'entraîner une réaction destinée à la sécurité, en particulier pour confirmer ou rejeter la valeur déterminée par l'unité de calcul comme étant saisie dans l'unité de calcul et/ou dans le processeur de sécurité.

12. Dispositif selon l'une quelconque des revendications 8 à 11, **caractérisé en ce que** l'unité de contrôle (30), et de préférence le processeur de sécurité (40), est/sont des composants de système réalisés indépendamment du dispositif d'affichage.

13. Dispositif selon l'une des revendications 8 à 12, **caractérisé en ce que** l'unité de contrôle (30) est relié avec un enregistreur de données pour stocker des code de contrôle déterminés.

14. Dispositif selon l'une des revendications 8 à 13, **caractérisé en ce que**, en guise de redondance pour augmenter de sécurité
un composant de détection supplémentaire est prévu, auquel est relié (34) l'unité de contrôle (30) pour sélectionner une région de surveillance ; et/ou
le(s) composant(s) de détection (16) est/sont muni(s) de deux circuits de lecture séparés, l'unité de contrôle (30) étant reliée avec un autre circuit de lecture que l'unité de calcul (12) ; et/ou
au moins deux unités de contrôle (30) reliés à la ligne de données d'image (24) sont prévues, qui sont disposées pour la sélection d'une région de surveillance respective, et pour la génération et à la sortie resp. la lecture d'un code de contrôle pour les données d'image dans chaque région de surveillance ; et/ou
une unité de contrôle (30) apte au traitement en parallèle est prévue, qui permet de générer des codes de contrôle pour plusieurs régions de surveillance par traitement en parallèle, comprenant en particulier un FPGA, un DSP et/ou un ou plusieurs micro-contrôleurs.

15. Poste de conduite pour un véhicule, en particulier pour un véhicule locomoteur, comprenant un terminal multifonctions (10) ayant un dispositif d'affichage (14) à saisie tactile, **caractérisé par** un dispositif selon l'une des revendications 8 à 14 pour confirmer ou rejeter de manière sécurisée une valeur qui a été déterminée comme étant saisie sur le dispositif d'affichage à saisie tactile.

16. Terminal multi-fonction (10) pour commander un dispositif, une machine ou un système, en particulier une console de commande pour un poste d'aiguillage ou une centrale électrique, comprenant un dispositif d'affichage (14) à saisie tactile, **caractérisé par** un dispositif selon l'une des revendications 8 à 14, pour confirmer ou rejeter de manière sécurisée une valeur qui a été déterminée comme étant saisie sur le dispositif d'affichage à saisie tactile.

17. Terminal (10) pour un système à sécurité d'autorisation, en particulier pour des services bancaires, comprenant un dispositif d'affichage (14) à saisie tactile, **caractérisé par** un dispositif selon l'une des revendications 8 à 14, pour confirmer ou rejeter de manière sécurisée une saisie d'autorisation, dans lequel la saisie au niveau du dispositif d'affichage à saisie tactile est transmise grâce à un ou plusieurs codes de contrôle, le cas échéant par un canal de retour sécurisé, et vérifiée, en particulier par un processeur de sécurité.
